# EUROPÄISCHE PATENTSCHRIFT

(11) **EP 1 922 158 B1**
(45) Veröffentlichungstag und Bekanntmachung des Hinweises auf die Patenterteilung: **02.03.2011**
(21) Anmeldenummer: 06776757.4
(22) Anmeldetag: 11.08.2006
(51) Int. Cl.: B07C 3/10, G06K 9/20

(54) **VERFAHREN ZUR IDENTIFIZIERUNG VON POSTALISCHEN SENDUNGEN**
METHOD FOR IDENTIFYING POSTAL MAILINGS
PROCEDE D'IDENTIFICATION D'ENVOIS POSTAUX

(30) Priorität: 26.08.2005 DE 102005040689
(43) Veröffentlichungstag der Anmeldung: 21.05.2008
(73) Patentinhaber: SIEMENS AKTIENGESELLSCHAFT, 80333 München (DE)
(72) Erfinder: BERGER, Gisbert, 12487 Berlin (DE); WORM, Katja, 13053 Berlin (DE); WILKE, Wolf-Stephan, 78467 Konstanz (DE)
(86) Internationale Anmeldenummer: PCT/EP2006/007938
(87) Internationale Veröffentlichungsnummer: WO 2007/022876

(56) Entgegenhaltungen:
- EP-A- 1 389 493
- WO-A-01/23108
- WO-A-2004/002638
- DE-A1- 4 000 603

## Beschreibung

Die Erfindung betrifft ein Verfahren zur Identifizierung von z.B. postalischen Sendungen, wie beispielsweise aus DE-A-40 00 603. WO-A-01/23108 oder WO-A-2004/00238 bekannt.

Bestimmte Anwendungen erfordern eine bildhafte Identifizierung von Objekten. Die Erfindung wird beispielhaft für Objekte in postalischen Prozessen wie Sortierprozessen erläutert, bei denen es sich in der Regel um Sendungen handelt.

Der Erfindung liegt die Aufgabe zugrunde, ein schnelles Verfahren zur sicheren Identifizierung von postalischen Sendungen anzugeben.

Erfindungsgemäß wird die Aufgabe durch die Merkmale des Anspruches 1 gelöst.

Dabei wird ein Verfahren zur Identifizierung von postalischen Sendungen beschrieben, bei welchem:
- zunächst die Sendungen jeweils mittels mindestens eines erkennbaren bildhaften Merkmals und mittels mindestens einer externen Information registriert werden,
- anschließend zur Identifizierung einer Sendung eine Erkennung des bildhaften Merkmals durchgeführt wird und bei unvollständiger Identifizierung ein weiterer Identifizierungsschritt mittels der externen Information einbezogen wird.

Dabei sollte die Erkennung eines oder mehrerer bildhafter Merkmale mit minimalem Aufwand verbunden sein, so dass zunächst die damit verbundene Identifizierung einer Sendung einfach und schnell erfolgt.

Derartige bildhafte Merkmale können ein Rahmen für ein Textfeld, ein buntes Logo, eine Kategorie von Stempelausdruck, etc. sein.

Führt/führen diese erste(n) Erkennung(en) zu keiner Identifizierung der Sendung, da z.B. Massensendungen gleiche Kategorien von Stempelaufdrucken aufweisen, wird zumindest eine weitere voraussichtlich in einer Datenbank registrierte externe Information als weiteres Hilfsmittel bzw. Diskriminierungsmittel für die Identifizierung der Sendungen verwendet.

Dabei können unterschiedliche Arten von externen Informationen verwendet werden.

Es können bei der Registrierung manuell eingegebene Daten sein. Beispielsweise wird von einem Operator vor dem Sortierprozess eines Massensendungstyps die Lage des Adressfeldes (die auf jeder Sendung dieses Typs gleich ist) manuell eingegeben. Diese Information wird bei der Registrierung jeder Sendung mit abgespeichert. Bei der späteren Identifizierung einer Sendung ist dann die Lage des Adressblocks auf den in Frage kommenden Sendungskandidaten bereits bekannt und kann in die Identifizierung einbezogen werden. Ein derartiges weiteres extern eingegebenes Merkmal hat den Vorteil einfach zu sein und, wie bei den vorigen bildhaften Merkmalen, eine schnelle Diskriminierung bzw. Identifizierung zwischen Sendungen zu gewährleisten. Im Allgemeinen eignen sich externe Informationen, die auf diskriminierende Bereiche hinweisen, sehr gut.

Ebenfalls können gewählte externe Informationen kodierte bzw. lesbare Daten umfassen, z.B. ID-Codes, Barcodes, 2D-Codes, RFID-Tags oder Textfelder (z.B. Zustellungsadresse, Absender). Aufgrund der Dekodierung bzw. der Interpretation solcher Daten ist der Aufwand zur Erkennung eines registrierten ID-Codeergebnisses oder einer registrierten Adresse höher, jedoch wertvoll, falls auf Kosten der Zeit die Fehlerrate der Identifizierungen minimal gehalten werden muss.

Vorteilhafte Ausgestaltungen der Erfindung sind in den Unteransprüchen dargelegt.

Insbesondere ist die Form der Registrierung der bildhaften Merkmale und der externen Informationen als Merkmalsvektor in einer Datenbank von großem Vorteil, welche bei der Identifizierung in flexibler Weise je nach Aufwand für die Erkennung der bildhaften Merkmale bzw. für den einbezogenen Identifizierungsschritt der externen Informationen abfragbar ist.

Im sendungsbezogenen Merkmalsvektor können ferner bildhafte Merkmale und externe Informationen in einer derartigen Reihenfolge angeordnet werden, dass ihre Verwendung für die Identifizierung einer Sendung mit minimalem Erkennungsaufwand verbunden ist. Dadurch werden die einfacheren bzw. schnelleren Diskriminierungsmittel bevorzugt.

Weiterhin können mögliche Änderungen, Entfernungen oder Hinzufügungen von bildhaften Merkmalen und externen Informationen zwischen der Registrierung und der Identifizierung berücksichtigt bzw. neu registriert werden, vorzugsweise bei Anbringung von einer Umleitungsadresse, mindestens eines Barcodes, mindestens eines 2D-Codes, eines RFID-Codes, mindestens eines Aufklebers, mindestens eines Stempelaufdrucks oder anderer Entwertungen. Dadurch sind weitere Arten von Hilfsmitteln zur Identifizierung der Sendungen verwendbar.

Anschließend wird die Erfindung in einem Ausführungsbeispiel anhand der Zeichnungen erläutert.

Dabei zeigen
- FIG 1: Allgemeines Prinzip einer Registrierung,
- FIG 2: Allgemeines Prinzip einer Identifizierung,
- FIG 3: Detailliertes Beispiel einer Registrierung,
- FIG 4: Detailliertes Beispiel einer Identifizierung.

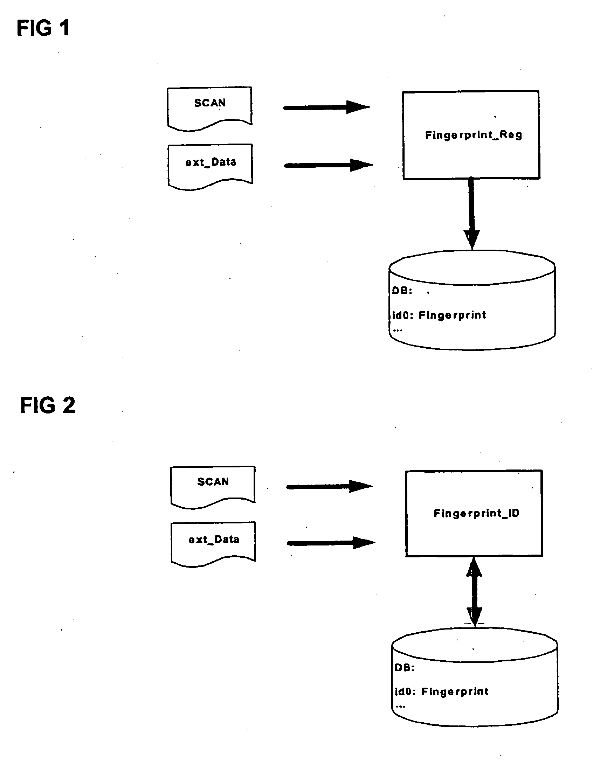

In FIG 1 ist z.B. am Beginn des Sortierprozesses für Postsendungen, insbesondere Massensendungen, die Registrierung mindestens eines erkennbaren bildhaften Merkmals und mittels mindestens einer externen Information ext_Data prinzipiell dargestellt.
Für die Erkennung des bildhaften Merkmals wird z.B. die Sendung als digitales Bild SCAN eingescannt. Aus dem gescannten Bild werden ein oder mehrere bildhafte Merkmale in einem weiteren Registrierungsschritt Fingerprint_Reg erkannt, extrahiert und als identifiziertes Merkmal in einer Datenbank DB in einem Merkmalsvektor id0: Fingerprint registriert. Gleiches gilt für die Registrierung der externen Informationen ext_Data, welche im Merkmalsvektor id0: Fingerprint registriert werden.

FIG 2 zeigt prinzipiell die zur Registrierung gemäss FIG 1 anschließende erfindungsgemäße Identifizierung. Dieser Schritt erfolgt z.B. an einer/mehreren Sortierstelle(n) eines Sortierzentrums. Wie in FIG 1 werden erkannte bildhafte Merkmale des aufgenommenen Bilds SCAN über einen Identifizierungsschritt Fingerprint_ID mit registrierten Daten der Datenbank DB verglichen. Dabei können bereits Merkmalsvektoren in der Datenbank DB identifiziert werden, deren Merkmale mit den bildhaften Merkmalen übereinstimmen. Sollte jedoch die Identifizierung nicht vollständig erfolgen, werden besser übereinstimmende Merkmalsvektoren der Datenbank DB mit den weiteren externen Informationen ext_Data aus der Sendung gesucht. Damit wird die Identifizierung in der Datenbank immer enger bzw. selektiver, bis sie schließlich mit hoher Sicherheit gelingt.

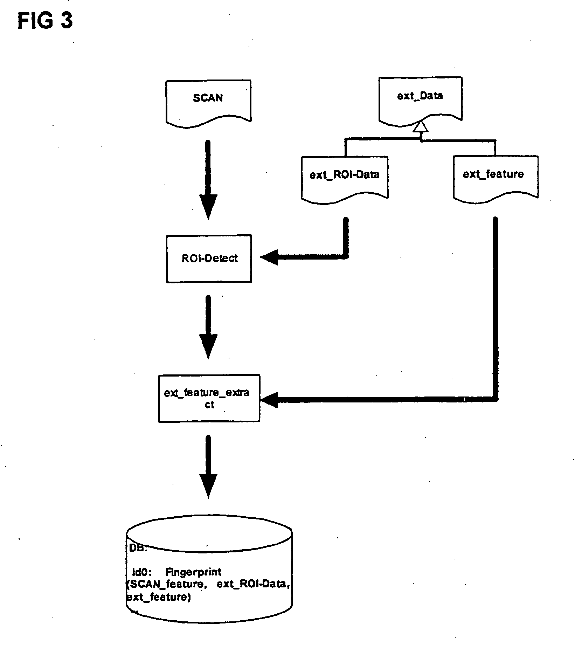

In FIG 3 wird ferner ein detailliertes Beispiel der Registrierung gemäss FIG 1 dargestellt. Dabei wird die externe Information ext_Data in zwei Registrierungsinformationen aufgeteilt. Dabei ist eine Lokalisierungsinformation ext_ROI_Data zur Bestimmung einer Lage oder eines Bereiches eines Merkmals z.B. zur Markierung eines Adressblockes, sowie ein weiteres externes Merkmal ext_feature wie ein Barcode vorhanden. Zusätzlich zur Registrierung der Sendung mittels bildhafter Merkmale SCAN_feature des Sendungsbilds SCAN wird die Registrierung schrittweise mit den weiteren externen Informationen ext_ROI_Data, ext_feature über eine Detektion ROI_Detect der Markierung des Adressblockes bzw. über eine Extrahierung ext_feature_extract des weiteren externen Merkmals ext_feature fortgesetzt. Damit wird ein sendungsbezogener Merkmalsvektor id0: Fingerprint(SCAN_feature, ext_ROI_Data, ext_feature) in der Datenbank DB erzeugt/registriert.

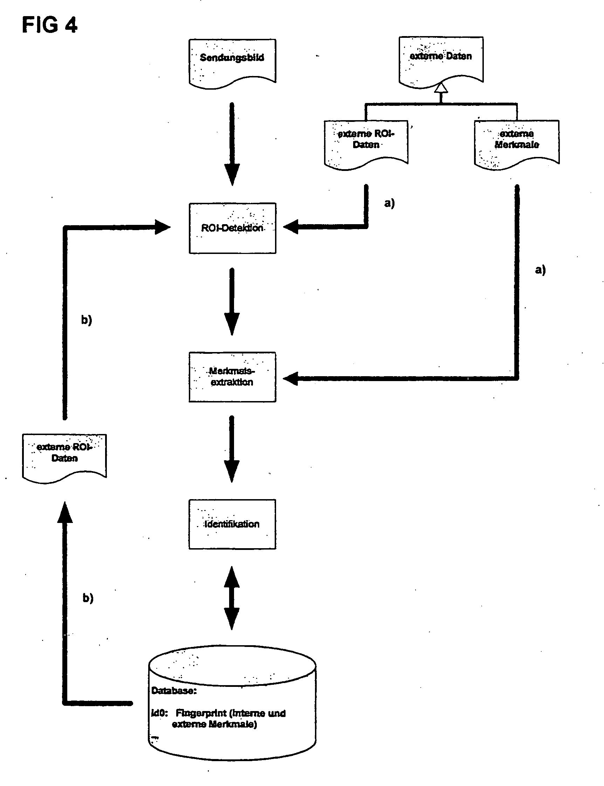

In FIG 4 wird nun ein detailliertes Beispiel der Identifizierung gemäss FIG 2 und ausgehend vom detaillierten Beispiel der FIG 3 dargestellt. Die aus dem Sendungsbild SCAN detektierten bildhaften Merkmale SCAN_feature sowie die ggf. extrahierten externen Informationen ext_ROI_Data, ext_feature werden über ein Identifizierungsmodul Ident in der Datenbank mit bereits registrierten Merkmalsvektoren gesucht. Dabei erfolgt die Suche derart, dass der zu den Merkmalen bzw. Informationen übereinstimmende Merkmalsvektor id0: Fingerprint(SCAN_feature, ext_ROI_Data, ext_feature) identifiziert wird, wenn er wenigstens die vollständigen bildhaften Merkmale und die externen Informationen aus der zu identifizierenden Sendung umfasst.

Redundante bildhafte Merkmale und/oder redundante externe Informationen können ebenfalls zur Erhöhung der Sicherheit der Identifizierung verwendet werden, jedoch auf Kosten der Schnelligkeit der Identifizierung.

## Patentansprüche

1. Verfahren zur Identifizierung von postalischen Sendungen, wobei
- zunächst die Sendungen jeweils mittels mindestens eines erkennbaren bildhaften Merkmals und mittels mindestens einer externen Information registriert werden,
- anschließend zur Identifizierung einer Sendung eine Erkennung des bildhaften Merkmals durchgeführt wird und bei unvollständiger Identifizierung ein weiterer Identifizierungsschritt mittels der externen Information einbezogen wird.

2. Verfahren nach Anspruch 1,
**dadurch gekennzeichnet, dass** bei der Registrierung eine manuell ermittelte, externe Information verwendet wird.

3. Verfahren nach Anspruch 2,
**dadurch gekennzeichnet, dass** die externe Information ein diskriminierendes Merkmal zwischen Kategorien von Massensendungen enthält.

4. Verfahren nach einem der Ansprüche 2 bis 3,
**dadurch gekennzeichnet, dass** die externe Information eine Lokalisierung eines erkennbaren Merkmals umfasst, vorzugsweise eine Lage bzw. eine Markierung eines Adressblocks auf der Sendung.

5. Verfahren nach einem der Ansprüche 1 bis 4,
**dadurch gekennzeichnet, dass** die externe Information bei der Registrierung und/oder der Identifikation maschinell erkannt wird.

6. Verfahren nach einem der Ansprüche 5,
**dadurch gekennzeichnet, dass** die externe Information ein erkennbares Merkmal umfasst, vorzugsweise ein Textfeld, einen ID-Code, einen Barcode oder einen RFID-Tag.

7. Verfahren nach einem der vorhergehenden Ansprüche,
**dadurch gekennzeichnet, dass** bei der Registrierung erkennbare bildhafte Merkmale und externe Informationen in Form eines sendungsbezogenen Merkmalsvektors in einer Datenbank gespeichert werden, welche bei der anschließenden Identifizierung abgefragt wird.

8. Verfahren nach Anspruch 7,
**dadurch gekennzeichnet, dass** bildhafte Merkmale und externe Informationen im Merkmalsvektor in einer derartigen Reihenfolge zugeordnet werden, indem ihre Verwendung für die Identifizierung einer Sendung mit minimalem Erkennungsaufwand bedingt ist.

9. Verfahren nach einem der vorhergehenden Ansprüche,
**dadurch gekennzeichnet, dass** Änderungen, Entfernungen oder Hinzufügungen auf der Sendungsoberfläche oder andere Änderungen zwischen der Registrierung und der Identifizierung als externe Information berücksichtigt bzw. neu registriert werden, vorzugsweise bei Anbringung einer Umleitungsadresse, mindestens eines Barcodes, mindestens eines 2D-Codes, eines RFID-Codes, mindestens eines Aufklebers, mindestens eines Stempelaufdruckes oder anderer Entwertungen.

## Claims

1. Method for identifying postal mailings, wherein
- the mailings are first registered respectively by means of at least one recognisable pictorial feature and by means of at least one external information item,
- recognition of the pictorial feature is then carried out to identify a mailing and if identification is incomplete, a further identification step by means of the external information item is incorporated.

2. Method according to claim 1,
**characterised in that** a manually determined, external information item is used during registration.

3. Method according to claim 2,
**characterised in that** the external information item contains a discriminating feature between categories of mass mailing.

4. Method according to one of claims 2 to 3,
**characterised in that** the external information item comprises a location of a recognisable feature, preferably a position or marking of an address block on the mailing.

5. Method according to one of claims 1 to 4,
**characterised in that** the external information item is recognised by machine during registration and/or identification.

6. Method according to one of claims 5,
**characterised in that** the external information item comprises a recognisable feature, preferably a text field, an ID code, a bar code or an RFID tag.

7. Method according to one of the preceding claims,
**characterised in that** pictorial features and external information items recognisable during registration are stored in a database in the form of a mailing-related feature vector which is called up during the subsequent identification.

8. Method according to claim 7,
**characterised in that** pictorial features and external information items are assigned in the feature vector in such a sequence that their use for identifying a mailing requires minimum recognition outlay.

9. Method according to one of the preceding claims,
**characterised in that** changes, removals or additions on the mailing surface or other changes are taken into account as external information items or registered as new between registration and identification, preferably with the application of a divert address, at least a bar code, at least a 2D code, an RFID code, at least a sticker, at least a stamp print or other cancellations.

## Revendications

1. Procédé d'identification d'envois postaux, dans lequel
- on enregistre d'abord les envois respectivement au moyen d'au moins une caractéristique technique d'image pouvant être détectée et au moyen d'au moins une information extérieure,
- on effectue ensuite pour l'identification d'un envoi une détection de la caractéristique d'image et, si l'identification est incomplète, on effectue un autre stade d'identification au moyen de l'information extérieure.

2. Procédé suivant la revendication 1,
**caractérisé en ce que**
on utilise, lors de l'enregistrement, une information extérieure déterminée manuellement.

3. Procédé suivant la revendication 2,
**caractérisé en ce que**
l'information extérieure contient une caractéristique discriminante entre des catégories d'envois de masse.

4. Procédé suivant l'une des revendications 2 à 3,
**caractérisé en ce que**
l'information extérieure comprend une localisation d'une caractéristique pouvant être détectée, de préférence une position ou un repérage d'un bloc d'adresse sur l'envoi.

5. Procédé suivant l'une des revendications 1 à 4,
**caractérisé en ce que**
on détecte automatiquement l'information extérieure lors de l'enregistrement et/ou lors de l'identification.

6. Procédé suivant la revendication 5,
**caractérisé en ce que**
l'information extérieure comprend une caractéristique pouvant être détectée, de préférence un champ de texte, un code ID, un code-barre ou une étiquette RFID.

7. Procédé suivant l'une des revendications précédentes,
**caractérisé en ce que**
on mémorise des caractéristiques d'image pouvant être détectées lors de l'enregistrement et des informations extérieures, sous la forme d'un vecteur de caractéristique se rapportant à l'envoi, dans une base de données que l'on peut interroger lors de l'identification venant ensuite.

8. Procédé suivant la revendication 7,
**caractérisé en ce que**
on associe des caractéristiques d'images et des informations extérieures dans le vecteur de caractéristique suivant une succession telle que son utilisation pour l'identification d'un envoi s'effectue avec une dépense minimum de détection.

9. Procédé suivant l'une des revendications précédentes,
**caractérisé en ce que**
on tient compte ou on réenregistre comme informations extérieure des modifications, des éliminations, des additions sur la surface de l'envoi ou d'autres modifications entre l'enregistrement et l'identification, de préférence lors de l'opposition d'une adresse de renvoi, d'au moins un code-barre, d'au moins un code 2D, d'un code RFID, d'au moins un autocollant, d'au moins un timbrage ou d'autres opérations d'oblitération.
